**Europäisches Patentamt**

**European Patent Office**

**Office européen des brevets**

(19)

(11) Veröffentlichungsnummer : **0 060 403**
**B1**

(12) **EUROPÄISCHE PATENTSCHRIFT**

(45) Veröffentlichungstag der Patentschrift :
04.07.84

(51) Int. Cl.³ : **C 01 B 25/41**

(21) Anmeldenummer : **82101217.6**

(22) Anmeldetag : **18.02.82**

(54) Verfahren zur Herstellung von abriebfestem Natriumtriphosphat.

(30) Priorität : **13.03.81 DE 3109652**

(43) Veröffentlichungstag der Anmeldung :
**22.09.82 Patentblatt 82/38**

(45) Bekanntmachung des Hinweises auf die Patenterteilung : **04.07.84 Patentblatt 84/27**

(84) Benannte Vertragsstaaten :
**AT BE DE FR GB IT NL SE**

(56) Entgegenhaltungen :
**DE-B- 1 120 626**
**DE-B- 2 515 141**
**DE-C- 1 002 742**
**DE-C- 1 007 748**
**DE-C- 2 008 495**
**GB-A- 1 204 570**
**US-A- 3 661 514**
**US-A- 4 255 274**

(73) Patentinhaber : **HOECHST AKTIENGESELLSCHAFT**
**Postfach 80 03 20**
**D-6230 Frankfurt am Main 80 (DE)**

(72) Erfinder : **Haas, Hans, Dr.**
**Bünnagelring 17**
**D-5351 Swisttal-Strassfeld (DE)**
Erfinder : **Kowalski, Werner**
**Am Ginsterberg 7**
**D-5354 Weilerswist-Metternich (DE)**

## Beschreibung

Die vorliegende Erfindung betrifft ein Verfahren zur Herstellung von körnigem Natriumtriphosphat (auch als Natriumtripolyphosphat oder abgekürzt mit NTPP bezeichnet), das eine hohe Abriebfestigkeit aufweist.

In steigendem Maße wird in neuerer Zeit von Wasch- und Geschirrspülmittelherstellern körniges abriebfestes NTPP eingesetzt, das mit den übrigen Komponenten dieser Produkte auf trockenem Wege zusammengemischt werden kann, während früher Wasch- und Geschirrspülmittel weitgehend durch Sprühtrocknung wäßriger Slurries erzeugt wurden.

Im Zuge der Bestrebungen zur Einsparung von Energie und zur Verhinderung der Hydrolyse des NTPP im Slurry gewinnt auf dem Reinigungsmittelsektor das trockene Zusammenmischen der Produkte aus deren Komponenten zunehmend an Bedeutung.

NTPP, das sich für diese Zwecke eignet, muß jedoch ganz bestimmte Voraussetzungen erfüllen :

1. Es muß möglichst abriebfest sein ;

2. Es soll möglichst körnig sein und keine oder nur geringe Staubanteile aufweisen ;

3. Es muß in einem breiten Schüttgewichtsbereich von ca. 350 bis 900 g/l zur Verfügung stehen.

Abriebfestes körniges NTPP wurde bislang im wesentlichen durch Granulation von NTPP hergestellt, welches zunächst in einem vorgegangenen Arbeitsgang nach irgendeinem Verfahren gewonnen wurde. Dieses NTPP muß in weiteren getrennten Verfahrensstufen fein gemahlen und in bestimmte Siebfraktionen getrennt werden, welche dann durch Behandeln mit Wasser oder wäßrigen Phosphatlösungen auf Drehtellern, in Trommeln oder Drehrohren granuliert werden, worauf das Granulat meist noch getrocknet, calciniert und nochmals gesiebt werden muß.

Diese Granulate können zwar als abriebfest gelten, sie weisen aber wegen der hohen Dichte des kompakten Granulates immer ein mittleres bis hohes Schüttgewicht auf, das von 550 g/l bis etwa 1 000 g/l reicht (DE-C-20 08 495, DE-C-25 15 141).

Die Herstellung von Granulaten mit geringem Schüttgewicht ist auf diese Weise bisher nicht gelungen.

Die vorteilhafteste Methode der Herstellung von NTPP aus Natriumorthophosphaten ist die der Sprühtrocknung von Natriumorthophosphatlösungen oder -suspensionen in einer einzigen Verfahrensstufe.

Dabei fällt das Material durchweg in Form sog. « beads », das heißt kleinen Hohlkugeln an (DE-PS 10 97 421, DE-B-11 20 626). Diese Hohlkugeln sind jedoch sehr dünnwandig und weisen daher nur eine geringe Abriebfestigkeit auf.

Zur Herabsetzung des Schüttgewichtes der Sprühprodukte werden den Orthophosphatlösungen oder -suspensionen vor dem Versprühen häufig gasabspaltende Stoffe zugesetzt, welche die Hohlkugeln weiter aufblähen und noch dünnwandiger und noch weniger abriebfest machen.

Solche Zusatzstoffe sind zum Beispiel Harnstoff oder niederwertige Phosphorverbindungen (DE-C-10 02 742).

Aus diesem Grunde ist auch bereits versucht worden, die im Sprühtrocknungsprozeß anfallenden NTPP-beads zu härten.

So wird gemäß der US-A-3 661 514 in einem Sprühturm eine Alkaliorthophosphatlösung von unten gegen einen im Turm von oben nach unten gerichteten heißen Gasstrom gesprüht, der von Brennern erzeugt wird, die sich am Kopf des Turmes befinden. Die sich im oberen Turmteil bildenden festen Partikeln fallen dabei durch die von unten nach oben gesprühte Orthophosphatlösung hindurch, werden dabei mit einer dünnen Schicht Orthophosphat überzogen, das allerdings im unteren, kälteren Turmteil nicht mehr kondensiert wird.

Das auf diese Weise entstehende Produkt ist zwar abriebfester als üblicherweise erhaltene beads, hat aber den Nachteil, daß sein $Na_5P_3O_{10}$-Gehalt wegen der unvollständigen Kondensation des Orthophosphates deutlich vermindert ist.

Überraschenderweise wurde nun gefunden, daß sich dieser Nachteil vermeiden läßt, wenn man eine Lösung oder Suspension von Natriumorthophosphat, die ein $Na_2O : P_2O_5$-Molverhältnis aufweist, welches dem des Natriumtriphosphates entspricht, in einem beheizten Sprühturm mit Hilfe einer Düse unter Kondensierung des Orthophosphates in einer einzigen Verfahrensstufe sprühtrocknet, wobei man gemeinsam mit dem Orthophosphat eine Lösung eines hochmolekularen Phosphats des Natriums, Kaliums oder Ammoniums mit $P_2O_5$-Gehalten zwischen 60 und 73 Gewichts-% versprüht. Dabei vermischt man die Lösung des hochmolekularen Phosphats, das mindestens 5, vorzugsweise mehr als 50 P-Atome im Molekül enthält, — wie zum Beispiel Grahamsches Salz — mit der Lösung oder Suspension des Natriumorthophosphates in der Düse am zweckmäßigsten erst unmittelbar vor dem Versprühen, und zwar vorteilhafterweise so, daß die Kontaktzeit dieser beiden Komponenten bis zum Versprühen weniger als 0,4 sec beträgt. Ferner empfiehlt es sich, die Lösung des hochmolekularen Phosphats mit einer Konzentration an diesem gelösten Phosphat von 0,5 bis 25 Gewichts-% und in einer Menge einzusetzen, die — bezogen auf den $P_2O_5$-Gehalt der Natriumorthophosphatlösung und berechnet als Festsubstanz — 0,005 bis 5 Gewichts-%, vorzugsweise 0,01 bis 0,1 Gewichts-%, beträgt.

Das erhaltene, praktisch wasserfreie Sprühprodukt kann im Bedarfstalle anschließend, in an sich bekannter Weise, durch Behandeln mit einer entsprechenden Menge Wasser oder Wasserdampf bis zu einem Kristallwassergehalt von 22,7 Gewichts-% hydratisiert werden, so daß man wasserfreie, teil- oder vollhydratisierte Produkte herstellen kann.

Außerdem ist es leicht möglich, durch Wahl geeigneter Sprühbedingungen, insbesondere durch Veränderung der Abgastemperatur des Turmes, Sprühprodukte mit Gehalten von 5 bis 99 Gewichts-% an der Hochtemperaturmodifikation des NTPP herzustellen (vgl. auch DE-C-10 07 748).

Erfindungsgemäß erhaltene Sprühprodukte haben normalerweise Schüttgewichte von 600 bis 900 g/l. Wie schon erwähnt, ist es bei einstufigen Sprühprozessen zur Herstellung von NTPP möglich, das Schüttgewicht der Sprühprodukte dadurch herabzusetzen, daß man dem zu versprühenden Orthophosphat vorher blähende Substanzen, wie zum Beispiel Harnstoff oder niederwertige Phosphatverbindungen zusetzt. Versprüht man derartige Ausgangssubstanzen in der erfindungsgemäßen Weise, so läßt sich das Schüttgewicht der Sprühprodukte bis auf 350 g/l senken, wobei das entstehende leichte Material eine ebenso hohe Abriebfestigkeit aufweist wie die erfindungsgemäß hergestellten Produkte mit höherem Schüttgewicht.

Diese haben Abriebfestigkeiten, die etwa zehnmal höher liegen als die von bei üblichen Sprühprozessen anfallendem NTPP. Im Sprühturm erfolgt eine Materialsichtung bereits durch den Abgasstrom. Staubförmiges Gut wird mit dem Abgas aus dem Turm ausgetragen und in Zentrifugalabscheidern daraus abgeschieden. Das körnige Produkt sammelt sich im unteren Teil des Turmes an. Durch Ausnutzung dieses Sichtereffektes im Sprühturm kann also auf eine technisch aufwendige Siebung des Produktes verzichtet werden.

Durch das erfindungsgemäße Verfahren ist es also möglich, in einfacher Weise ein NTPP zu erhalten, das nicht nur die eingangs erwähnten drei Anforderungen voll erfüllt, sondern das darüber hinaus in weiten Bereichen bezüglich seines Gehaltes an der Hoch- bzw. Tieftemperaturmodifikation und seines Kristallwassergehaltes variiert werden kann. Zum Versprühen wird zweckmäßigerweise eine Zweistoffdüse verwendet, bei der hochgespannter Dampf oder Druckluft als Treibmedium verwendet wird und die so ausgerüstet ist, daß sich in einer Verwirbelungskammer der Düse die Orthophosphatlösung oder -suspension und die Lösung des hochmolekularen Phosphates intensiv miteinander vermischen und anschließend gemeinsam unter Druck aus der Düse ausgesprüht werden.

Der Sprühturm selbst wird im Gleichstrom betrieben, das heißt Sprühlösung und heißer Gasstrom werden von oben nach unten geführt. Die Sprühdüse ist von einem Ring von Brennern umgeben, in denen das Heizgas, zum Beispiel Kohlenmonoxid oder Erdgas, verbrannt wird. Beim Durchgang durch die Flammenzone werden die aus der Sprühdüse austretenden Tropfen schlagartig entwässert und das darin enthaltene Orthophosphat anschließend direkt zu Triphosphat kondensiert.

Beispiel 1 (Vergleichsbeispiel)

In einem Behälter werden 23 m³ Orthophosphatslurry mit einem $P_2O_5$-Gehalt von 31 Gewichts-% hergestellt. Das Na : P-Verhältnis im Slurry beträgt 5 : 3. Stündlich werden 10 m³ von diesem Slurry in einem Sprühturm bei einer Abgastemperatur von 345 °C versprüht. Dabei fallen pro Stunde 8,7 t Triphosphat mit einem Gehalt an $Na_5P_3O_{10}$ von 97,4 Gewichts-% und an höher kondensierten Phosphaten von weniger 0,2 Gewichts-% an. Der Gehalt an Hochtemperaturform beträgt 8,5 Gewichts-%.

2,7 t des praktisch wasserfreien Produktes werden als staubförmiges Gut in 6 Zyklonen aus dem Abgas abgetrennt und gesondert gekühlt und gelagert. 6,0 t sammeln sich im unteren Teil des Turmes an und werden von dort aus in einen Kühler und anschließend in einen Bunker geleitet.

Dieses körnige Turmprodukt wird auf Abriebfestigkeit untersucht. Dazu wird das Material im Laboratorium abgesiebt. Von der auf dem 0,1 mm-Sieb verbleibenden Fraktion werden 50 g abgewogen und in eine kleine Drehtrommel gegeben. In der Drehtrommel befinden sich 8 Aluminiumkugeln von je 10 g Gewicht. In dieser Kugelmühle wird das Material genau 10 Minuten behandelt. Danach wird das Material erneut abgesiebt und der auf dem Sieb mit 0,1 mm Maschenweite verbleibende Rückstand zurückgewogen. Im vorliegenden Fall waren 2,7 g Material auf dem Sieb verblieben.

Die Abriebfestigkeit des Triphosphates betrug also 5,4 Gewichts-%.

Beispiel 2

Analog Beispiel 1 werden 23 m³ von dem gleichen Orthophosphatslurry hergestellt.

In einem weiteren Gefäß werden 5 m³ einer 8 gewichts%igen wäßrigen Lösung hochmolekularen Na-Schmelzphosphates (Graham-Salz) mit 70 % $P_2O_5$ angesetzt.

600 l dieser Lösung werden pro Stunde mit Hilfe einer Pumpe der Sprühdüse im Sprühturm zugeführt. In den Wirbelkammern der Düse vermischt sich die Zusatzlösung mit dem Orthophosphatslurry, von dem stündlich 10 m³ bei einer Abgastemperatur von 345 °C versprüht werden.

Das aus dem Sprühturm abgetrennte praktisch wasserfreie Triphosphat hat einen Gehalt von 98,3 Gewichts-% $Na_5P_3O_{10}$ ; der Gehalt an höher kondensierten Phosphaten ist kleiner als 0,2 %. Das Material liegt zu 9,1 Gewichts-% in der Hochtemperaturform (Form I) vor und hat ein Schüttgewicht von 750 g/l.

Entsprechend dem Beispiel 1 wird das unten aus dem Turm ausgetragene Produkt auf Abriebfestigkeit untersucht, die 57 Gewichts-% beträgt.

Beispiel 3 (Vergleichsbeispiel)

Gemäß Beispiel 1 werden 23 m³ Orthophosphatslurry mit 31 Gewichts-% $P_2O_5$ angesetzt. Dem Slurry werden 80 kg phosphorige Säure zugefügt und das Na : P-Verhältnis auf 5 : 3 eingestellt.

9 m³ dieses Slurries werden stündlich in einem Sprühturm mit einer Abgastemperatur von 410 °C verdüst. Dabei entstehen 7,8 t Tripolyphosphat, von denen 5,9 t als körniges Produkt im Turm verbleiben. Das Produkt hat einen Form-I-Gehalt von 51 Gewichts-% ; es enthält 97,3 Gewichts-% $Na_5P_3O_{10}$ ; der Gehalt an höher kondensierten Phosphaten beträgt 0,2 Gewichts-%, sein Schüttgewicht ist 440 g/l.

Die Abriebfestigkeit wird bestimmt zu 5,0 Gewichts-%.

Beispiel 4

Analog Beispiel 3 werden 23 m³ Orthophosphatslurry mit 31 Gewichts-% $P_2O_5$ angesetzt. Dem Slurry werden 80 kg phosphorige Säure zugeführt und das Na : P-Verhältnis auf 5 : 3 eingestellt.

In einem anderen Gefäß werden 5 m³ einer 3 Gewichts%igen Lösung von Ammoniumpolyphosphat angesetzt.

Pro Stunde werden 600 l dieser Lösung mit einer Pumpe der Sprühdüse im Sprühturm zugeführt. In den Wirbelkammern der Düse vermischt sich die Ammoniumpolyphosphatlösung mit dem Orthophosphatslurry, von dem wie im Beispiel 3 stündlich 9 m³ mit einer Abgastemperatur von 410 °C versprüht werden.

Die im Turm abgeschiedenen 5,9 t körniges Produkt haben einen Form I-Gehalt von 60 Gewichts-%, eine Abriebfestigkeit von 61 Gewichts-%, ein Schüttgewicht von 445 g/l sowie einen $Na_5P_3O_{10}$-Gehalt von 98,1 Gewichts-% ; der Gehalt an höher kondensierten Phosphaten ist kleiner als 0,2 Gewichts-%.

Beispiel 5

Gemäß Beispiel 4 hergestelltes praktisch wasserfreies Triphosphat mit einer Abriebfestigkeit von 61 Gewichts-% wird in einem mit Einbauten versehenen Drehrohr so lange mit Wasserdampf behandelt, bis der Wassergehalt des Fertigproduktes 2,9 Gewichts-% beträgt. Die Bestimmung der Abriebfestigkeit des Produktes ergibt 62 %, die des Schüttgewichtes 515 g/l.

Beispiel 6

Gemäß Beispiel 4 hergestelltes Triphosphat mit einer Abriebfestigkeit von 61 Gewichts-% wird in einem mit Einbauten versehenem Drehrohr so lange mit Dampf und Wasser behandelt, bis der Wassergehalt des Fertigproduktes 18,3 Gewichts-% beträgt. Die Ermittlung der Abriebfestigkeit ergibt 62 Gewichts-%, die des Schüttgewichtes 520 g/l.

**Ansprüche**

1. Verfahren zur Herstellung eines körnigen Natriumtriphosphates hoher Abriebfestigkeit, dadurch gekennzeichnet, daß man eine Lösung oder Suspension von Natriumorthophosphat, die ein $Na_2O$ : $P_2O_5$-Molverhältnis aufweist, welches dem des Natriumtriphosphates entspricht, in einem beheizten Turm mit Hilfe einer Düse, unter Kondensierung des Orthophosphates in einer einzigen Verfahrensstufe, sprühtrocknet, wobei man gemeinsam mit dem Orthophosphat eine Lösung eines hochmolekularen Phosphats des Natriums, Kaliums oder Ammoniums mit $P_2O_5$-Gehalten zwischen 60 und 73 Gewichts-% versprüht.

2. Verfahren nach Anspruch 1, dadurch gekennzeichnet, daß man die Lösung des hochmolekularen Phosphats mit der Lösung oder Suspension des Natriumorthophosphats erst unmittelbar vor dem Versprühen in der Düse vermischt.

3. Verfahren nach Anspruch 2, dadurch gekennzeichnet, daß man das Vermischen der Lösung des hochmolekularen Phosphats mit der Lösung oder Suspension des Natriumorthophosphates so durchführt, daß die Kontaktzeit dieser beiden Komponenten bis zum Versprühen weniger als 0,4 sec beträgt.

4. Verfahren nach einem der Ansprüche 1 bis 3, dadurch gekennzeichnet, daß man eine Lösung des hochmolekularen Phosphates mit einer Konzentration an diesem gelösten Phosphat von 0,5-25 Gewichts-% einsetzt.

5. Verfahren nach einem der Ansprüche 1 bis 4, dadurch gekennzeichnet, daß man, bezogen auf den $P_2O_5$-Gehalt der Natriumorthophosphatlösung bzw. -suspension, 0,005 bis 5 Gewichts-% des hochmolekularen Phosphates, berechnet als Festsubstanz, einsetzt.

6. Verfahren nach Anspruch 5, dadurch gekennzeichnet, daß man 0,01 bis 0,1 Gewichts-% des hochmolekularen Phosphates einsetzt.

7. Verfahren nach einem der Ansprüche 1 bis 6, dadurch gekennzeichnet, daß man das erhaltene Produkt anschließend durch Behandeln mit einer entsprechenden Menge Wasser oder Wasserdampf bis zu einem Kristallwassergehalt von 22,7 Gewichts-% hydratisiert.

**Claims**

1. Process for making granular sodium triphosphate of high abrasion resistance which comprises : subjecting a sodium orthophosphate solution or suspension containing $Na_2O$ and $P_2O_5$ in a molar ratio corresponding to that of the sodium triphosphate to a one-stage spray-drying operation inside a heated spray tower by means of a nozzle with condensation of the orthophosphate, the orthophosphate being sprayed jointly with a solution of a high molecular weight phosphate of sodium, potassium or ammonium containing between 60 and 73 weight % $P_2O_5$.

2. Process as claimed in claim 1, wherein the solution of the high molecular weight phosphate is mixed with the sodium orthophosphate solution or suspension inside the nozzle just prior to spraying.

3. Process as claimed in claim 2, wherein the solution of the high molecular weight phosphate is mixed with the sodium orthophosphate solution or suspension so that the contact time of these components is less than 0.4 second until spraying.

4. Process as claimed in any of claims 1 to 3, wherein a solution of high molecular weight phosphate containing this dissolved phosphate in a concentration of 0.5 to 25 weight % is used.

5. Process as claimed in any of claims 1 to 4, wherein the high molecular weight phosphate is used in a proportion of 0.005 to 5 weight %, calculated as solid substance and based on the $P_2O_5$-content of the sodium orthophosphate solution or suspension.

6. Process as claimed in claim 5, wherein the high molecular weight phosphate is used in a proportion of 0.01 to 0.1 weight %.

7. Process as claimed in any of claims 1 to 6, wherein the product obtained is hydrated by subsequently treating it with a suitable quantity of water or steam so as to establish a 22.7 weight % content of water of crystallization.

**Revendications**

1. Procédé de préparation d'un triphosphate de sodium granulé de forte résistance à l'abrasion, caractérisé en ce que l'on soumet une solution ou suspension d'orthophosphate de sodium présentant le rapport $Na_2O/P_2O_5$ qui correspond à celui du triphosphate de sodium, au séchage par pulvérisation en un seul stade à l'aide d'une buse dans une tour de pulvérisation chauffée avec condensation de l'orthophosphate, en pulvérisant l'orthophosphate conjointement avec une solution d'un phosphate de sodium, de potassium ou d'ammonium de poids moléculaire élevé d'une teneur en $P_2O_5$ entre 60 et 73 % en poids.

2. Procédé selon la revendication 1, caractérisé en ce que l'on mélange la solution du phosphate de poids moléculaire élevé avec la solution ou suspension d'orthophosphate de sodium seulement dans la buse, juste avant la pulvérisation.

3. Procédé selon la revendication 2, caractérisé en ce que l'on mélange la solution du phosphate de poids moléculaire élevé avec la solution ou suspension d'orthophosphate de sodium de façon que la durée de contact de ces deux composants soit de moins de 0,4 s jusqu'à pulvérisation.

4. Procédé selon l'une des revendications 1 à 3, caractérisé en ce que l'on utilise une solution de phosphate de poids moléculaire élevé présentant une concentration en ce phosphate dissous de 0,5 à 25 % en poids.

5. Procédé selon l'une des revendications 1 à 4, caractérisé en ce que l'on utilise le phosphate de poids moléculaire élevé en quantité de 0,005 à 5 % en poids, en matière solide, par rapport à la teneur en $P_2O_5$ de la solution ou suspension d'orthophosphate de sodium.

6. Procédé selon la revendication 5, caractérisé en ce que l'on utilise le phosphate de poids moléculaire élevé en quantité de 0,01 à 0,1 % en poids.

7. Procédé selon l'une des revendications 1 à 6, caractérisé en ce que l'on soumet ensuite le produit obtenu à un traitement par une quantité appropriée d'eau ou de vapeur d'eau pour l'hydrater jusqu'à une teneur en eau de cristallisation de 22,7 % en poids.